**Europäisches Patentamt**

**European Patent Office**

**Office européen des brevets**

(19)

(11) Veröffentlichungsnummer: **0 248 240**
**B1**

(12) **EUROPÄISCHE PATENTSCHRIFT**

(45) Veröffentlichungstag der Patentschrift:
**19.12.90**

(51) Int. Cl.⁵: **B60R 13/02**

(21) Anmeldenummer: **87106970.4**

(22) Anmeldetag: **14.05.87**

(54) **Dachverkleidung für Personenkraftwagen.**

(30) Priorität: **05.06.86 DE 3618999**

(43) Veröffentlichungstag der Anmeldung:
**09.12.87 Patentblatt 87/50**

(45) Bekanntmachung des Hinweises auf die Patenterteilung:
**19.12.90 Patentblatt 90/51**

(84) Benannte Vertragsstaaten:
**DE ES FR GB IT NL SE**

(56) Entgegenhaltungen:
**EP-A- 0 170 086**
**DE-A- 3 129 145**
**DE-A- 3 206 468**
**FR-A- 824 921**
**US-A- 3 635 519**
**US-A- 3 642 317**

**PATENT ABSTRACTS OF JAPAN, Band 8,**
**Nr. 16 (M-270)[1453], 24. Januar 1984; & JP - A**
**- 58 177 744 (NISSAN) 18.10.1983**

(73) Patentinhaber: **Göppinger Kaliko- und Kunstlederwerke GmbH, Ulmer Strasse 65, D-7332 Eislingen(DE)**

(72) Erfinder: **Siffermann, Roland, Feldwiesenstrasse 11, D-7326 Heiningen(DE)**
Erfinder: **Eickhoff, Thomas, Gebhardstrasse 19, D-7500 Karlsruhe(DE)**
Erfinder: **Gorr, Jürgen, Gutenbergstrasse 12, D-7320 Göpp./Faurndau(DE)**

(74) Vertreter: **Depmeyer, Lothar, i. Fa. Continental Gummi-Werke AG Königsworther Platz 1 Postfach 169, D-3000 Hannover 1(DE)**

## Beschreibung

Die Erfindung betrifft eine Dachverkleidung für Personenkraftwagen gemäß dem Oberbegriff des Patentanspruchs 1.

Lösbar befestigte Formhimmel haben den Vorteil, daß man sie montieren und bei Bedarf zerstörungsfrei wieder demontieren kann. Es sind Himmel dieser Art bekannt, bei denen die Dachschale selbst mit Ausnehmungen oder Hinterschneidungen versehen ist, die als Verankerungsmittel den Formhimmel formschlüssig mit der Dachschale verbinden. Eine andere Möglichkeit zur lösbaren Befestigung von Formhimmeln ist aus dem Dokument JP-A 58 177 744 bekannt, in dem an bestimmten Stellen der Formhimmel angeordnete Verankerungsmittel nach Art von Klettbändern vorgeschlagen wurden.

Der Erfindung liegt im wesentlichen die Aufgabe zugrunde, die besagten Dachverkleidungen so zu verbessern, daß aufgrund des Vorhandenseins und der lösbaren Anordnung des Formhimmels eine günstige Beeinflussung, insbesondere eine Versteifung der Dachschale möglich ist, wobei auch Dröhneffekte vermindert werden.

Zur Lösung dieser Aufgabe ist die Dachschale mit einer festhaftend angeordneten, die Dachschale verstärkenden Deckschicht versehen, an der die Verankerungsmittel befestigt sind.

Demgemäß ist aufgrund der Erfindung nicht eine unmittelbare Befestigung des Formhimmels über die erwähnten Verankerungsmittel vorgesehen, vielmehr erfolgt diese Befestigung mit Hilfe einer Deckschicht, die zugleich zur Befestigung der Verankerungsmittel für den Formhimmel dient. Diese Deckschicht hat aber zugleich eine versteifende und zudem eine Antidröhnwirkung.

Vorzugsweise soll die Deckschicht in Leichtbauweise plattenförmig ausgeführt und mit der Dachschale durch Kleben verbunden werden. Insbesondere soll diese Deckschicht als Wellpappe ausgeführt sein, die nicht nur in der Anschaffung billig ist, sondern auch infolge ihrer Hohlräume zu einer Wärmedämmung beiträgt. Die Deckschicht soll demgemäß vorzugsweise eine Wandstärke haben, die mehrfach größer ist als diejenige der Dachschale. Die Wandstärke dieser Deckschicht kann dabei eine Wandstärke erhalten, die im wesentlichen derjenigen des Formhimmels entspricht.

Um die vorgenannten Wirkungen zu erzielen, soll sich die erwähnte Deckschicht zumindest im wesentlichen über die Flächenbereiche der Dachschale erstrecken, die auch vom Formhimmel überdeckt werden, um so die angestrebte Versteifungswirkung herbeiführen zu können.

Die Verankerungsmittel können an sich beliebig sein. Sie müssen jedoch eine schnelle Handhabung zulassen und eine rüttelsichere Verankerung bilden. So können Schiebeclipse, Druckknöpfe, Klebebänder, Klett- und Flauschbänder als Verankerungsmittel dienen. Alle diese Verankerungsmittel müssen jedoch eine Lösbarkeit gestatten, ohne Beschädigungen an den benachbarten Schichten, insbesondere am Formhimmel zu verursachen, wenn eine Montage bzw. Demontage notwendig ist.

Die Deckschicht kann auch porig und/oder zellig auf Kunststoffbasis oder einem geeigneten anderen Werkstoff in vorzugsweise steifer oder halbsteifer Eigenschaft sein, wenngleich sich Tafelwellpappe wegen der vorerwähnten guten Eigenschaften besonders eignet.

Der Formhimmel besteht in üblicher Weise aus einer Haupt- oder Grundplatte, die an der dem Fahrzeug inneren Seite zugekehrten Fläche mit Dekormaterial kaschiert ist. Die Grundplatte des Himmels kann indessen in üblicher Weise ein naturfaserverstärkter Kunststoff, ein glasfaserverstärkter Kunststoff, ein auf der Basis von Polyurethan hergestellter poriger oder zelliger Körper, aber auch ein Material auf der Basis EPS sein, jedoch können auch alle anderen Kunststoffe, sowohl thermoplastische als auch nicht thermoplastische Kunststoffe verwendet werden.

Es versteht sich, daß alle zur Anwendung kommenden Werkstoffe gegen Feuchtigkeitseinflüsse unempfindlich sein müssen, was z.B. durch Präparationen erreicht werden kann, wenn der Werkstoff aufgrund seiner Grundbestandteile nicht schon die gewünschten Eigenschaften besitzt.

Weitere Einzelheiten der Erfindung werden anhand der Zeichnung erläutert, in der zwei Ausführungsbeispiele dargestellt sind.

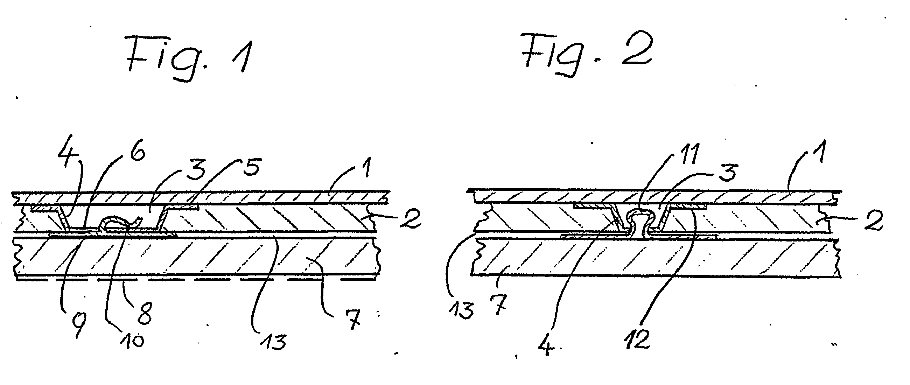

Die Fig. 1 und 2 zeigen je senkrechte Teilschnitte durch die Dachhaut eines Personenstraßenfahrzeuges.

Die aus Stahlblech bestehende Dachschale des Fahrzeuges ist mit 1 bezeichnet. Die Innenfläche der Dachschale 1 ist mit einer Deckschicht 2 aus Tafelwellpappe versehen, die durch einen Kleber festhaftend an der Innenfläche der Dachschale 1 befestigt ist.

Mit gehörigem Abstand ist die Deckschicht 2, deren Wandstärke mehrfach größer ist, vorzugsweise drei- bis achtmal größer ist als die Wandstärke der Dachschale 1, mit Ausnehmungen versehen, die mit 3 bezeichnet sind. Diese Ausnehmungen dienen zur Befestigung von kleinen Metallkörpern 4, die mit einem abgewinkelten Rand 5 auf der Rückenfläche der Deckschicht 2 aufliegen. Die Metallkörper 4 haben eine Durchbrechung 6.

Der Formhimmel 7, dessen Innenfläche bei 8 mit einem Dekormaterial beschichtet sein kann, hat auf seiner Rückseite befindliche Metallplättchen 9, die einen hakenartigen Ansatz nach Art bekannter mechanischer Clipse aufweisen.

Um den Formhimmel 7 fest, jedoch lösbar verbinden zu können, wird der Ansatz 10 in die Durchbrechung 6 eingeführt. Alsdann muß eine kleine Verschiebebewegung des Formhimmels 7 vorgenommen werden, damit der Ansatz 10 die Stellung gemäß Fig. 1, also seine Verankerungsstellung einnehmen kann.

Durch eine gegenläufige Bewegung in Richtung auf die Durchbrechung 6 und ein Abziehen des Formhimmels kann dieser wieder abgelöst werden.

Auch bei der Ausführungsform gemäß Fig. 2 ist die Dachschale 1 durch eine Deckschicht 2 versteift und isoliert, jedoch ist hier eine druckknopfartige Verbindung des Formhimmels 7 mit der Deckschicht 2 vorgesehen. Die knopfartige Metallkörper 11 befindet sich am Formhimmel 7. Die Ausnehmung zum Einführen dieses Metallkörpers wird von einem geformten Dachteil 12 gebildet, das an der Deckschicht 2 der Fig. 1 entsprechend befestigt ist.

Die lösbare Befestigung des Formhimmels 7 an der Deckschicht 2 wird vorzugsweise so ausgeführt, daß sich zwischen dem Formhimmel 7 einerseits und der Deckschicht 2 andererseits ein kleiner Spalt 13 ergibt, der vorzugsweise eine Breite hat, die im wesentlichen der Wandstärke der Dachhaut 1 entspricht.

Es sei erwähnt, daß für die Deckschicht 2 verformbares Material benutzt werden soll, damit die Deckschicht der Innenkontur der Dachschale 1 angepaßt werden kann. Bei Pappen ist es auch möglich, eine Anpassung durch Schlitzen herbeizuführen, um so bessere Verformungsmöglichkeiten der Pappe erreichen zu können.

Die erwähnte Tafelwellpappe ist deshalb besonders geeignet, weil sie preiswert ist. Es ist ferner von Vorteil, wenn ihre verklebte Seite ein Spaltpapier ist, um das Ausbauen zu erleichtern.

Eine Vereinfachung bei der Montage des Formhimmels und der verstärkenden Deckschicht kann auch darin liegen, daß man nicht zunächst nur allein die Deckschicht und erst später den Formhimmel vorsieht, vielmehr ist es zweckmäßig, beide Teile zusammen, also die Deckschicht mit dem lösbar daran angeordneten Formhimmel zusammen innerhalb des Fahrzeugs durch Ankleben zu montieren.

## Patentansprüche

1. Dachverkleidung für Personenkraftwagen mit einem durch mechanische Verankerungmittel lösbar mit der Dachschale verbundenen Formhimmel, gekennzeichnet durch eine festhaftend mit der Dachschale verbundene und diese verstärkende Deckschicht (2), an der die Verankerungsmittel (4; 12) für den Formhimmel (7) befestigt sind.

2. Dachverkleidung nach Anspruch 1, dadurch gekennzeichnet, daß die Deckschicht (2) angeklebt ist.

3. Dachverkleidung nach Anspruch 1, dadurch gekennzeichnet, daß die Deckschicht (2) aus Wellpappe besteht.

4. Dachverkleidung nach Anspruch 1, dadurch gekennzeichnet, daß die Wandstärke der Deckschicht (2) mehrfach, vorzugsweise etwa drei- bis achtmal größer ist als die Wandstärke der Dachschale.

5. Dachverkleidung nach Anspruch 1, dadurch gekennzeichnet, daß die Wandstärke der Deckschicht im wesentlichen derjenigen des Formhimmels (7) entspricht.

6. Dachverkleidung nach Anspruch 1, dadurch gekennzeichnet, daß sich die Deckschicht zumindest im wesentlichen über die Flächenabschnitte der Dachschale (1) erstreckt, die auch von dem Formhimmel (7) bedeckt sind.

7. Dachverkleidung nach Anspruch 1, dadurch gekennzeichnet, daß zwischen der Deckschicht (2) und dem Formhimmel (7) ein Luftspalt vorgesehen ist.

8. Dachverkleidung nach Anspruch 1, dadurch gekennzeichnet, daß die Verankerungsmittel (4, 12) in einer Ausnehmung (3) der Deckschicht angeordnet sind und diese mit einem abgewinkelten Rand (5) hinterfassen.

9. Dachverkleidung nach den Ansprüchen 2 und 3, dadurch gekennzeichnet, daß die verklebte Seite der Wellpappe ein Spaltpapier ist.

10. Verfahren zum Montieren einer Dachverkleidung nach einem oder mehreren vorhergehenden Ansprüchen, dadurch gekennzeichnet, daß die Deckschicht und der Formhimmel miteinander vereinigt und dann diese beiden Teile gemeinsam im Fahrzeug montiert werden, indem die Deckschicht festhaftend mit der Dachschale verbunden wird.

## Claims

1. Roof covering for passenger vehicles, having a moulded lining, which is detachably connected to the roof panel by mechanical securing means, characterised by a top layer (2), which is connected in a firmly adhesive manner to the roof panel and reinforces such, the securing means (4, 12) for securing the moulded lining (7) being mounted on said top layer.

2. Roof covering according to claim 1, characterised in that the top layer (2) is adhered.

3. Roof covering according to claim 1, characterised in that the top layer (2) is formed from corrugated cardboard.

4. Roof covering according to claim 1, characterised in that the wall thickness of the top layer (2) is many times greater, preferably substantially three to eight times greater, than the wall thickness of the roof panel.

5. Roof covering according to claim 1, characterised in that the wall thickness of the top layer corrsponds substantially to that of the moulded lining (7).

6. Roof covering according to claim 1, characterised in that the top layer extends at least substantially over the surface portions of the roof panel (1), which portions are also covered by the moulded lining (7).

7. Roof covering according to claim 1, characterised in that an air gap is provided between the top layer (2) and the moulded lining (7).

8. Roof covering according to claim 1, characterised in that the securing means (4, 12) are disposed in a recess (3) formed in the top layer, and they engage behind said top layer with a bent-over edge (5).

9. Roof covering according to claims 2 and 3, characterised in that the adhered side of the corrugated cardboard is a multilayered paper.

10. Method for mounting a roof covering according to one or more of the preceding claims, characterised in that the top layer and the moulded lining are joined together, and then these two component parts are mounted jointly in the vehicle, in that the top layer is connected to the roof panel in a firmly adhesive manner.

## Revendications

1. Revêtement de toit pour voitures de tourisme comportant un garnissage façonné relié de façon séparable au pavillon de toit par des moyens d'ancrage mécaniques, caractérisé par une couche de recouvrement (2), reliée de façon adhérente au pavillon de toit et assurant son renforcement, et sur laquelle sont fixés les moyens d'ancrage (4, 12) pour le garnissage façonné (7).

2. Revêtement de toit selon la revendication 1, caractérisé en ce que la couche de recouvrement (2) est collée.

3. Revêtement de toit selon la revendication 1, caractérisé en ce que la couche de recouvrement (2) est formée de carton ondulé.

4. Revêtement de toit selon la revendication 1, caractérisé en ce que l'épaisseur de paroi de la couche de recouvrement (2) est plusieurs fois supérieure, de préférence environ trois à huit fois supérieure, à l'épaisseur de paroi du pavillon de toit.

5. Revêtement de toit selon la revendication 1, caractérisé en ce que l'épaisseur de paroi de la couche de recouvrement (2) correspond sensiblement à celle du garnissage façonné (7).

6. Revêtement de toit selon la revendication 1, caractérisé en ce que la couche de recouvrement s'étend, au moins sensiblement sur les parties superficielles du pavillon de toit (1) qui sont également recouvertes par le garnissage façonné (7).

7. Revêtement de toit selon la revendication 1, caractérisé en ce qu'il est prévu un intervalle d'air entre la couche de recouvrement (2) et le garnissage façonné (7).

8. Revêtement de toit selon la revendication 1, caractérisé en ce que les moyens d'ancrage (4, 12) sont disposés dans un évidement (3) de la couche de recouvrement et s'accrochent en arrière de celle-ci par un bord recourbé (5).

9. Revêtement de toit selon les revendications 2 et 3, caractérisé en ce que le côté collé du carton ondulé est un papier pelable.

10. Procédé de montage d'un revêtement de toit selon l'une ou plusieurs des revendications précédentes, caractérisé en ce que la couche de recouvrement et le garnissage façonné sont réunis l'un avec l'autre et on monte ensuite ces deux parties ensemble dans le véhicule, en reliant de façon adhérente la couche de recouvrement au pavillon de toit.

Fig. 1

Fig. 2

EP 0 248 240 B1